(19) Europäisches Patentamt
European Patent Office
Office européen des brevets

(11) **EP 4 357 132 A1**

(12) **EUROPEAN PATENT APPLICATION**

(43) Date of publication:
**24.04.2024 Bulletin 2024/17**

(21) Application number: **22315241.4**

(22) Date of filing: **18.10.2022**

(51) International Patent Classification (IPC):
**B32B 27/32** (2006.01)   **B32B 27/34** (2006.01)
**C08L 23/04** (2006.01)   **C08J 5/18** (2006.01)

(52) Cooperative Patent Classification (CPC):
**C08J 5/18; B32B 27/32; B32B 27/34;**
C08J 2323/08; C08J 2423/08; C08J 2425/08;
C08J 2471/02; C08L 23/0815; C08L 23/0869

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ARKEMA FRANCE
92700 Colombes (FR)**

(72) Inventors:
• **Yasuda, Maho
  KYOTO, 600-8815 (JP)**

• **David, Romain
  KYOTO, 600-8815 (JP)**
• **Pineau, Quentin
  27470 SERQUIGNY (FR)**
• **Boissiere, Claude Olivier
  27470 SERQUIGNY (FR)**

(74) Representative: **Arkema Patent
Arkema France
DRD-DPI
420, rue d'Estienne d'Orves
92705 Colombes Cedex (FR)**

(54) **COMPOSITION BASED ON A POLYAMIDE AND A POLYMER COMPRISING POLYAMIDE BLOCKS AND POLYETHYLENE GLYCOL BLOCKS**

(57)    The present invention relates to a composition comprising a polyamide, a polymer having polyamide (PA) blocks and polyethylene glycol (PEG) blocks, a functionalized polyolefin, and a polyolefin, wherein the weight ratio of (a+b)/(c+d) is < 1.

The invention also relates to a method of making said composition, a kit for obtaining said composition, an article comprising or made from said composition, and a method of making said article.

**Description**

TECHNICAL FIELD

The present invention relates to a composition comprising a polyamide, a polymer having polyamide (PA) blocks and polyethylene glycol (PEG) blocks, a functionalized polyolefin, and a polyolefin. The invention also relates to a method of making said composition, a kit for obtaining said composition, an article comprising or made from said composition, and a method of making said article.

TECHNICAL BACKGROUND

A nonporous breathable film, or a film which is impermeable yet breathable is widely used in various applications. As one of such applications, a nonporous breathable film is advantageously used for packaging, especially for food packaging, a package of a fresh product such as a fruit, a vegetable, a freshly cut meat and fish, for example. The quality and shelf life of these fresh products can be enhanced by optimizing the environment within the package enclosing them, especially by adjusting a moisture vapor transmission rate (MVTR), a permeability and a selectivity of gas such as $CO_2$ and $O_2$. MVTR, also called water vapor transmission rate (WVTR), is the amount of water vapor that passes through a substance or material over a specific period of time. For food packaging and storage, too high values of MVTR is not desired since this may lead to withering of fruits or vegetables.

Document US 5959042 discloses a material for obtaining a nonporous breathable film comprising (a) a polyamide, (b) a polymer having PA blocks and polyether PEG blocks, (c) optionally a polyolefin, and (d) a functionalized polyolefin, in which the amounts by weight of a, b, c, and d are such that a>0, b>0, c+d>0, a+b+c+d=100, a/b>0.2, (a+b)/(c+d)>1, and b/(a+b+c+d)<0.5.

Document EP 0476963 discloses a polymeric blend for preparing a nonporous breathable film comprising a hydrophilic block poly(ether-co-amide) containing between about 20 and about 80 weight % PEG blocks, and a hydrophobic polymer selected from any of: a) a block poly(ether-co-amide) containing essentially no PEG blocks, b) polyamide, c) a polyester, or d) a polyurethane.

However, there is still a need to optimize the MVTR, gas permeability and/or processability of films. There is more generally a need for a composition to make an improved packaging material such as a film or a sheet to preserve food or fresh products in an ideal environment.

SUMMARY OF THE INVENTION

The present invention relates to a composition comprising:

(a) a polyamide (PA),
(b) a polymer having polyamide (PA) blocks and polyethylene glycol (PEG) blocks,
(c) a functionalized polyolefin, and
(d) a polyolefin,

wherein the weight ratio of (a+b)/(c+d) is < 1.

In some embodiments, the weight ratio of b/(a+b+c+d) is between 0.1 and 0.5.

The present invention makes it possible to address the need expressed above. It provides, more particularly, suitable MVTR and gas permeability, which contribute to an ideal environment in food packaging, thus to better quality and longer shelf life of packaged food products.

This is accomplished through a combination of a polyamide, a polymer having PA and PEG blocks, a functionalized polyolefin and a polyolefin. Notably, by selecting the weight ratio of the amount of polyamide (a) and the polymer (b) to the amount of functionalized polyolefin (c) and polyolefin (d) < 1, the composition according to the invention advantageously enables to provide a film with an improved quality in MVTR, gas permeability and processability. As such, the composition according to the invention is especially useful for making a film, a sheet, or a bag to be used for food packaging. Such package based on the composition according to the invention may reduce withering and prevent mold growth of fresh products such as fruits and vegetables enclosed therein during the storage and/or transport.

DESCRIPTION OF EMBODIMENTS

The invention will now be described in more detail without limitation in the following description.

A composition according to the invention comprises (a) a polyamide (PA), (b) a polymer having polyamide (PA) blocks and polyethylene glycol (PEG) blocks, (c) a functionalized polyolefin, and (d) a polyolefin.

(a) Polyamide

In the present application, the term "polyamide" stands for the condensation products:

-    of one or several amino-acids such as aminocaproic, amino-7-heptanoic, amino-11-undecenoic and amino-12-dodecanoic acid; or one or several corresponding lactames such as caprolactame, oenanlactame and lauryllactame; or
-    of one or several substantially stoechiometric combinations of one or several aliphatic and/or cycloaliphatic and/or aromatic-aliphatic diamines, or salts thereof, with one or several aliphatic or aromatic carboxylic diacids or salts thereof; examples of such diamines are hexamethylenediamine, dodecamethylenediamine, metaxylylenediamine, bis(4-aminocyclohexyl)-methane (BACM), bis (3-methyl-4-amino-cyclohexyl)-methane (BMACM) and trimethylhexamethylenediamine, examples of diacids being terephthalic, isophthalic, adipic, azelaic, sebacic, suberic and docedanedicarboxylic acid; or
-    any mixture of the above monomers; and
-    any mixture of the resulting condensation products, optionally with other polymers compatible with the polyamides.

By way of example, the polyamide (PA) can be chosen from PA6, PA6.6, PA6.10, PA10.10, PA10.12, PA11, PA12, PA6.12 and PA12.12, the first figure indicating the number of carbon atoms of the diamine and the second figure indicating the number of carbon atoms of the dicarboxylic acid; or the sole figure indicating the number of carbon atoms in the repeat unit obtained from an amino acid or lactame.
Preferably, the mean carbon content of the repeating units of the polyamide is at least 8, preferably from 8 to 14, more preferably from 10 to 12.
Typically; the polyamide (PA) is chosen from PA10.10, PA10.12, PA11, PA12 and PA12.12.
The molecular weight of the polyamides can vary greatly, as those skilled in the art will understand.
The term *"mean carbon content of the repeating units"* means the mean of the numbers of carbon atoms of each repeating unit present in the polyamide, weighted by the molar proportion of said repeating unit relative to the total amount of polyamide blocks. For example, when the polyamide comprises a single repeating unit, as in the case of a PA X or of PA X.Y as defined above, the mean carbon content of the repeating units of the polyamide blocks is equal to the number of carbon atoms of said repeating unit, given that a polyamide repeating unit contains, in a known manner, only one amide function. In the case of a PA X block, the number of carbon atoms of the repeating unit is X. In the case of a PA X.Y block, the number of carbon atoms of the repeating unit is $(X + Y)/2$ since the unit X.Y comprises two amide functions.
Mixtures of polyamides are also possible.
Preferably, the polyamide (PA) in (a) is or comprises PA11 or PA12, preferably PA11. PA11 advantageously has a good miscibility with polyolefins, thus providing a good processability of the composition, that facilitates making a thinner film or sheet.

(b) Polymer PEBA

In the present application, a polymer having polyamide blocks and polyether blocks may also be referred to as a polyether block amide (PEBA).
The polymer (b) having polyamide (PA) blocks and polyethylene glycol (PEG) blocks may also be referred to as PA/PEG.
In some embodiments, the polymer (b) consists of polyamide blocks and polyethylene glycol blocks.
Such polymers having PA blocks and PEG blocks result from the co-polycondensation of polyamide sequences having reactive terminations and polyether sequences having reactive terminations, such as, among others:

-    polyamide sequences having diamine terminations with polyoxyalkylene sequences having dicarboxylic terminations;
-    polyamide sequences having dicarboxylic terminations with polyoxyalkylene sequences having diamine terminations obtained by cyanoethylation and hydrogenation of aliphatic dihydroxy alpha-omega polyoxy alkylene sequences, known as polyetherdiols;
-    polyamide sequences having diamine terminations with polyetherdiol sequences, the products obtained being, in this particular case, polyetheresteramides (abbreviated to PEEA below).

Such polymers are for example described in French patents Ser. Nos. 74 18913 and 77 26678 as well as in the following U.S. Pat. Nos.: 4,331,786, 4,115,475, 4,195,015, 4,839,441, 4,864,014, 4,230,838 and 4,332,920 the content of which is incorporated herein by reference.

The polyamide sequences having dicarboxylic terminations are for example obtained from condensation of aminocarboxylic alpha-omega acids, from lactames or substantially stoechiometric combinations of carboxylic diacids and diamines, in the presence of a chain limiting carboxylic diacid. The polyamide blocks can be PA6, PA6.6, PA6.10, PA10.10, PA10.12, PA11, PA12, PA6.12 and PA12.12, are preferably PA10.10, PA10.12, PA11, PA12, or PA11.12. Preferably, the polyamide blocks are PA11 or PA12, preferably PA11.

Preferably, the mean carbon content of the repeating units of the polyamide blocks is at least 8, preferably from 8 to 14, more preferably from 10 to 12.

According to one embodiment, the polyamide of the polyamide blocks in (b) is the same as the polyamide in (a).

The number-average molar mass Mn of the polyamide sequences PA varies between 300 and 15,000 and, preferably, from 600 to 5,000.

Regardless of whether the polyether blocks are included in the polymer chain having polyamide blocks and polyether blocks in the form of diols or in the form of diamines, they will be called, for the sake of simplicity, PEG blocks. The number-average molar mass Mn of the polyether sequences is between 100 and 6,000 and is preferably between 300 and 3,000.

The number-average molar mass may be set by the content of chain limiter. It may be calculated according to the equation:

$$M_n = n_{monomer} \times MW_{repeating\ unit} / n_{chain\ limiter} + MW_{chain\ limiter}$$

In this formula, nmonomer represents the number of moles of monomer, $n_{chain\ limiter}$ represents the number of moles of (e.g. diacid) limiter in excess, $MW_{repeating}$ unit represents the molar mass of the repeating unit, and $MW_{chain}$ limiter represents the molar mass of the limiter in excess. The number-average molar mass of the rigid blocks and of the flexible blocks can be measured before the copolymerization of the blocks by gel permeation chromatography (GPC).

The polymers having PA blocks and PEG blocks can also comprise randomly-distributed moieties. Such polymers can be prepared by simultaneously reacting polyether and precursors of the polyamide blocks. For example, reaction can be caused between a polyetherdiol, a lactame, (or a corresponding alpha-omega aminoacid) and a chain limiting diacid, in the presence of a small amount of water. A polymer is obtained having essentially polyether blocks, polyamide blocks. of greatly varying length, along with the various reagents that have reacted randomly and which are randomly distributed along the polymer chain.

The polymers, having PA blocks and PEG blocks may have, for example, a Shore D hardness typically comprised between 20 and 75 and, advantageously, between 30 and 70, and an inherent viscosity comprised between 0.8 and 2.5, measured in meta-cresol at 20°C for an initial concentration of 0.5% m/m.

The polymers having PA blocks and PEG blocks can be formed, in by weight, by 5 to 85% of polyether PEG blocks (and 95 to 15% PA) and, preferably from 20 to 80% polyether PEG blocks (and from 80 to 20% PA) and, more preferably, from 30 to 70% polyether PEG blocks (and 70 to 30% PA).

In some embodiments, the polymer (b) comprises at least 30% by weight, preferably at least 40% by weight, more preferably at least 50% by weight of polyethylene glycol (PEG), with regards to the total weight of the polymer (b).

Preferably, the polymer having PA blocks and PEG blocks comprises a single type of block. Advantageously, a polymer having PA11 blocks and PEG blocks (PA11/PEG), or a polymer having PA12 blocks and PEG blocks (PA12/PEG) is employed. PA11 advantageously has a good miscibility with polyolefins, thus providing a good processability of the composition, that facilitates making a thinner film or sheet.

One can however also employ blends of polymers having polyamide blocks and polyether blocks.

Such polymers having polyamide blocks and polyether blocks are available commercially from ARKEMA under the commercial name Pebax®, ®, or from EVONIK under the commercial name VESTAMID®.

These polymers having PA blocks and PEG blocks have characteristics of water vapor permeability and are designated as being "hydrophilic" as conventionally understood by the person skilled in the art.

(c) Functionalized polyolefin

In the present application, the term "functionalized polyolefin" represents polymers of alpha-olefins and reactive units (functionalities); such reactive units are acid, anhydride or epoxy functionalities.

The functionalized polyolefin (c) serves as a compatibilizer or a compatibilizing agent for compatibilizing polyamides and polyolefins.

As examples, we can cite the polyolefins previously grafted or co- or ter-polymerized by unsaturated epoxides such as glycidyl (meth)acrylate, or by carboxylic acids or the corresponding salts or esters such as (meth)acrylic acid (the latter being able to be partially or completely neutralized by metals such as Zn, etc.) or, further, by carboxylic acid anhydrides such as maleic anhydride. The term "co- or ter-polymerized" means that the functional groups are then integrated within the main polymer chain.

The functionalized polyolefin (c) can be the following (co)polymers, grafted with maleic anhydride or glycidyl methacrylate, in which the grafting rate is for example from 0.01 to 5% by weight:

- PE, PP, copolymers of ethylene with propylene, butene, hexene or octene containing, for example, 35 to 80% by weight ethylene;
- ethylene and vinyl acetate (EVA) copolymers containing up to 40% by weight vinyl acetate;
- ethylene and alkyl (meth)acrylate copolymers containing up to 40% by weight alkyl(meth)acrylate;
- ethylene and vinyl acetate (EVA) and alkyl (meth)acrylate copolymers, containing up to 40% by weight EVA and alkyl (meth)acrylate,
- ethylene/propylene copolymers having a majority of propylene grafted with maleic anhydride and then condensed with mono-aminated polyamide (or a polyamide oligomer). These products are described in EP 0342066.

The functionalized polyolefin (c) can also be a co- or ter-polymer of at least one of the following units: (1) ethylene, (2) alkyl (meth)acrylate or (meth) acrylic acid or saturated carboxylic acid vinyl ester and (3) maleic anhydride or glycidyl (meth)acrylate.

As an example of functionalized polyolefins of the latter type, the following copolymers can be mentioned in which ethylene represents preferably at least 60% by weight and where the monomer (3) represents, for example, 0.1 to 10% by weight of the copolymer:

- ethylene/alkyl (meth)acrylate or (meth)acrylic acid/maleic anhydride or glycidyl methacrylate copolymers;
- ethylene/vinyl acetate/maleic anhydride or glycidyl methacrylate copolymers;
- ethylene/vinyl acetate/alkyl (meth)acrylate or (meth)acrylic acid/maleic anhydride or glycidyl methacrylate copolymers.

In the above copolymers, the (meth)acrylic acid can be put in the form of a Zn or Li salt.

The term "alkyl (meth)acrylate" preferably stands for $C_1$ to $C_6$ alkyl methacrylates and acrylates and can be chosen from, methyl, ethyl, n-butyl, iso-butyl and 2-ethylhexyl acrylate, and most preferably methyl and ethyl methacrylate.

Advantageously, the functionalized polyolefin (c) is or comprises an ethylene/butyl acrylate/maleic anhydride copolymer or an ethylene/ethyl acrylate/glycidyl methacrylate copolymer.

Moreover, these polyolefins can also be cross-linked using any suitable process or agent (di-epoxy, diacid, peroxy, etc.); the expression functionalized polyolefin also covers the above polyolefins crosslinked with a bi-functional reagent such as di-acid, di-anhydride, di-epoxy, etc.

The molecular weight, MFI index and density of these functionalized polyolefins can also vary greatly, as those skilled in the art will understand.

Mixtures of functionalized polyolefins are also possible.

Preferably, the functionalized polyolefin (c) is or comprises an ethylene and glycidyl methacrylate (GMA) copolymer. GMA gives reactivity versus OH, COOH, $NH_2$, for example, leading to optimal dispersion during melt mixing with engineering thermoplastics such as polyamide, polyesters, polyphenylene sulfide. As an ethylene copolymer, ethylene- GMA copolymer is compatible with LDPE in substantially all proportions, and with almost all other ethylene copolymers. The ethylene-GMA copolymer advantageously has a good miscibility with polyolefins, thus providing a good processability, that facilitates making a thinner film or sheet.

(d) Polyolefin

The polyolefin (d) is a homopolymer or copolymer of alpha-olefins and/or diolefins, such as for example ethylene, propylene, butene-1, octene-1, butadiene.

Examples are:

- homopolymers such as polyethylene, in particular LDPE (low density polyethylene), HDPE (high density polyethylene), LLDPE (linear low density polyethylene), or VLDPE (very low density polyethylene), polyethylene metallocene or polypropylene;
- ethylene/alpha-olefin copolymers such as ethylene/propylene;
- ethylene propylene rubbers (EPRs), styrene/ethylene-butene/butadiene (SEBS), styrene/butadiene/styrene (SBS), styrene/isoprene/styrene (SIS), styrene/ethylene-propylene/styrene (SEPS) and ethylene/propylene/diene (EPDM) block copolymers; .
- copolymers of ethylene with at least one product selected from unsaturated carboxylic acids salts or esters such as alkyl (meth)acrylate, typically methyl acrylate, or vinyl esters of saturated carboxylic acids such a vinyl acetate, in which the proportion of comonomer can be up to 40% by weight.

The copolymers mentioned above can be copolymerized in a random or sequenced manner and have a linear or branched structure.

The polyolefins may have, for example, a density comprised between 0.86 and 0.965 and a melt flow index MFI comprised, for example, between 0.3 and 40 following ASTM D1238 with a standard load of 2.16 kg and at a die temperature of 190°C. The polyolefins can also be cross-linked, using any suitable agent (epoxy, etc.).

Polyolefin mixtures are also possible.

Preferably, the polyolefin in (d) is or comprises an ethylene-methyl acrylate copolymer or LLDPE.

Composition

The composition according to the invention comprises (a) the polyamide, (b) the polymer having polyamide (PA) blocks and polyethylene glycol (PEG) blocks, (c) the functionalized polyolefin, and (d) the polyolefin, as defined above.

In one embodiment, in the composition according to the invention, the weight ratio of (a)/(b) is less than 1, preferably is from 0.05 to 0.95, more preferably from 0.1 to 0.5, more preferably from 0.25 to 0.45.

Preferably, the weight ratio of b/(a+b+c+d) is between 0.1 and 0.5.

In some embodiments, (a) is present in an amount of 10-30% by weight relative to the total weight of (a)+(b)+(c), (b) is present in an amount of 40-80% by weight relative to the total weight of (a)+(b)+(c), and (c) is present in an amount of 10-30% by weight relative to the total weight of (a)+(b)+(c).

In one embodiment, (d) is present in an amount of 40-70% by weight relative to the total weight of the composition, namely relative to the total weight of (a)+(b)+(c)+(d).

In some embodiments, (a) is present in an amount of 5-15% by weight relative to the total weight of the composition, namely the total weight of (a)+(b)+(c)+(d), (b) is present in an amount of 15-40% by weight relative to the total weight of (a)+(b)+(c)+(d), (c) is present in an amount of 5-15% by weight relative to the total weight of (a)+(b)+(c)+(d), and (d) is present in an amount of 40-70% by weight relative to the total weight of (a)+(b)+(c)+(d).

Preferably, the composition according to the invention does not comprise a styrene maleic anhydride (SMA).

The composition according to the invention may also be mixed with further additives, such as fillers, pigments, and/or dyes.

A method of making the composition

The invention also relates to a method of making the composition according to the invention.

The method comprises a step of blending:

(a) a polyamide (PA),
(b) a polymer having polyamide (PA) blocks and polyethylene glycol (PEG) blocks,
(c) a functionalized polyolefin, and
(d) a polyolefin,

wherein the weight ratio of (a+b)/(c+d) is less than 1.

Each of (a) the polyamide, (b) the polymer having polyamide (PA) blocks and polyethylene glycol (PEG) blocks, (c) the functionalized polyolefin, and (d) the polyolefin are those defined above.

(a), (b), (c) and (d) may be blended together in one step. Alternatively, one or some of (a), (b), (c) and (d) may be blended separately in any order.

In some embodiments, the method comprises a step (i) of blending (a) a polyamide, (b) a polymer having polyamide (PA) blocks and polyethylene glycol (PEG) blocks, (c) a functionalized polyolefin to obtain a base polymer blend or mixture, and a step (ii) of blending (d) a polyolefin to the base polymer blend or mixture.

Preferably, the base polymer blend or mixture is in the form of pellets before the step (ii).

The steps of blending may be a step of dry-blending the components in a powdered form.

Alternatively and preferably, the steps of blending may be a step of melt-blending part or all of the components. Melt-blending may be in particular carried out by compounding. For example, melt-blending may be carried out in an extruder or co-kneader, more preferably a twin-screw extruder or a co-kneader.

The melt-blending may be carried out at a temperature from 140 to 300°C, preferably of from 160 to 270°C, more preferably of from 180 to 210°C.

Preferably, (d) the polyolefin is dry-blended to the base polymer blend or mixture.

At the end of the steps of blending, the composition may be produced for example in the form of flakes, crumbs, granules or pellets. Alternatively, it may be further ground or milled to a powder. It may also be provided in the form of a paste.

The step (i) of blending (a), (b) and (c) to obtain a base polymer blend or mixture, and the step (ii) of blending (d) to the base mixture may be performed simultaneously or in a temporally separated manner. Specifically, the step (i) may be reworded as a step of obtaining a base polymer blend or mixture by blending (a), (b), and (c), and the step (ii) may be performed by blending (d) to the base polymer blend or mixture obtained by the step (i) previously, for example several hours, days, or months before the step (ii).

Kit for obtaining the composition

The invention also relates to a kit for obtaining the composition according to the invention.

The kit comprises a first component and a second component, the weight ratio of (a+b)/(c+d) being less than 1. The first component comprises (a) a polyamide (PA), (b) a polymer having polyamide (PA) blocks and polyethylene glycol (PEG) blocks, and (c) a functionalized polyolefin. The second component comprises (d) a polyolefin.

Each of (a) the polyamide, (b) the polymer having polyamide (PA) blocks and polyethylene glycol (PEG) blocks, (c) the functionalized polyolefin, and (d) the polyolefin are those defined above.

In some embodiments, the first component and the second component may be contained, stored, or packaged in separate containers respectively, and such separate containers of two components may be optionally packaged together, by any appropriate form of packaging. Alternatively, the containers of two components may be provided separately without any common packaging.

Article comprising or made from the composition and a method of making the article

The invention also relates to an article comprising or made from the composition according to the invention, and a method of making said article.

The article can be prepared using any method known in the art, for example by extrusion, injection, molding, etc.

In some embodiments, the article is a film, a sheet, or a bag.

In some embodiments, the method of making the article comprises the following steps:

- obtaining the composition by the method as defined above; and
- extruding or molding the composition into a film or a sheet.

The films obtained from the composition according to the invention are nonporous and breathable, in other words they are permeable to water vapor but impermeable to water, and, more generally, permeable to gasses but impermeable to liquids.

The article obtained from the composition according to the invention, especially in form of film, give improved values of MVTR. The improved values of MVTR may be between 8 and 500 $g/m^2/24h$, preferably between 10 and 500 $g/m^2/24h$, more preferably between 12 and 500 $g/m^2/24h$, measured measured at 23°C, for a relative humidity level of 50% at a thickness of 25 $\mu$m, following the method described in ASTM standard E 96 B-Water method. Too low values of MVTR may lead to mold growth, while too high values of MVTR may lead to withering of fruits or vegetables. Such films enable an ideal environment in a package of fresh products such as fruits and vegetables. Depending on the kind of fruits or vegetable, the film can be chosen adequately according to the MVTR values.

The gas selectivity is defined as the ratio of the permeability of two pure gases, measured separately under the same conditions. The permeability ratio of $CO_2$ to $O_2$ of the films obtained from the composition according to the invention is typically lower than 12 and preferably between 4 and 10, these values are valid at 0% relative humidity (0% RH) and 23°C.

The films obtained from the composition according to the invention give an improved processability and a higher tensile strength. The tensile strength (MD) may be more than 10MPa, preferably more than 14MPa, more preferably more than 18MPa, measured according to the method described in ASTM D 638 Type IV. Such films facilitate manufacturing and processing steps.

These films can been prepared using any method known in the art, for example by extrusion or molding. The films have a thickness comprised, typically, between 5 and 500 $\mu$m, preferably between 10 and 250 $\mu$m, more preferably between 20 and 100 $\mu$m. The films can be associated with other films and/or supports. For example, the film obtained from the composition according to the invention may be coextruded or laminated on a support such as a grid made of polyethylene or of PVC.

In some embodiments, the article made from the composition according to the invention is used for packaging, for example food packaging and a package for fresh products, such as fruits, vegetables, freshly cut meats and fishes.

For example, the film obtained from the composition according to the invention may be only part of a package, the other part being made of any other materials.

The invention also relates to the use of a composition as defined above for food packaging.

The following examples illustrate the invention without limiting it.

EXAMPLES

The following examples illustrate the invention without limiting it.

Compositions having the blend ratios outlined in Table 1 were prepared. Specifically, (a) PA, (b) PA/PEG PEBA, and (c) functionalized polyolefin were blended and compounded using a twin screw extruder into pellets. The obtained pellets were blended with (d) polyolefin, and extruded into films. For examples 12and 13, styrene maleic anhydride (SMA) was further blended with (a) PA, (b) PA/PEG (PEBA), and (c) functionalized polyolefin and compounded into pellets, which were blended with (d) polyolefin and extruded into films.

Table 1

| Examples | (a) PA Rilsan® BESNO TL | (b) PA/PE G PEBA PEBA | (c) functionalized polyolefin Lotader® AX8840 | (c) functionalized polyolefin Lotader® LX4100 | (d) polyolefin Lotryl® 29MA | (d) polyolefin Ultzex® 2022L | SMA | (a+b)/ (c +d) | b/(a+ b+c+ d) |
|---|---|---|---|---|---|---|---|---|---|
| CE1 | 22.8 | 53.2 | 19 | | 5 | | | 3.2 | 0.56 |
| CE2 | 20.4 | 47.6 | 17 | | 15 | | | 2.1 | 0.53 |
| 3 | 14.4 | 33.6 | 12 | | 40 | | | 0.9 | 0.48 |
| 4 | 7.2 | 16.8 | 6 | | 70 | | | 0.3 | 0.34 |
| CE5 | 22.8 | 53.2 | 19 | | | 5 | | 3.2 | 0.53 |
| CE6 | 20.4 | 47.6 | 17 | | | 15 | | 2.1 | 0.48 |
| 7 | 14.4 | 33.6 | 12 | | | 40 | | 0.9 | 0.34 |
| 8 | 7.2 | 16.8 | 6 | | | 70 | | 0.3 | 0.17 |
| 9 | 33.6 | 14.4 | 12 | | | 40 | | 0.9 | 0.14 |
| 10 | 16.8 | 7.2 | 6 | | | 70 | | 0.3 | 0.24 |
| 11 | 33.6 | 14.4 | | 12 | 40 | | | 0.9 | 0.14 |
| 12 | 33.6 | 14.4 | | 10.6 | 40 | | 1.4 | 0.9 | 0.15 |
| 13 | 14.4 | 33.6 | | 10.6 | 40 | | 1.4 | 0.9 | 0.34 |

Unit: weight % - Rilsan® BESNO TL: polyamide 11 (PA11) available from ARKEMA
- PEBA: PA11/PEG 1000/1500 (Mn: PA 11 blocks with molecular weight of 1000 g/mol and PEG blocks with a molecular weight of 1500 g/mol)
- Lotader® AX8840: a random copolymer of ethylene and glycidyl methacrylate (GMA) available from SK functional polymer
- Lotader®LX4110: a random terpolymer of ethylene, acrylic ester and maleic anhydride (MAH) available from SK functional polymer
- Lotryl® 29MA03T: a random ethylene-methyl acrylate copolymer from SK functional polymer
- Ultzex® 2022L: linear low density polyethylene (LLDPE) available from Prime polymer
- SMA: Styrene maleic anhydride available from Polyscope Polymers B.V.

For the films of examples 1-16 prepared as above, the measurements were performed under the following conditions:

- Machine: GTR-30XADJ4, G2700T

- Test surface: $15.2 \times 10^{-4} m^2$
- Detection: gas chromatography, thermal conductivity (TCD)
- Temperature: 23°C
- Relative humidity: 0%
- Carrier gas: Helium (pressure: 1bar)
- Diffusant gases: $O_2$, $CO_2$ (pressure: 1bar each)

Permeabilities to $CO_2$ and $O_2$ of the films were measured according to the method described in JIS K7126 using a gas chromatography at the temperature of 23°C and the relative humidity of 0% for a film thickness of 25 μm. The results of permeabilities to $CO_2$ and $O_2$ are given in $ml/m^2$ 24h atm in Table 2 below.

The Moisture Vapor Transmission Rate (MVTR) represents the amount of water vapor that passes through a film or structure over a period of 24 hours. For the films of 25 μm thickness prepared as above, MVTR was measured according to the method described in ASTM E 96 B-water method at 23°C, 50%RH in a Heraeus Votsch oven. The results of MVTR are given in $g/m^2/24h$ in Table 2 below.

Further, the tensile strength (MD) was measured for the films of examples prepared as above. The measurement was performed using the method described in ASTM D 638 Type IV. The results are given in MPa in Table 2 below.

Minimum thickness of a film was measured for examples prepared as above. The measurement was performed using a micrometer according to the standard ISO 4591. For the purpose of the present application, "minimum thickness" means a minimum thickness of a film which can be achieved on a continuous basis without a break in a film extrusion process.

Table 2

| Examples | $P(O_2)$ (ml/m² 24h atm) | $P(CO_2)$ (ml/m² 24h atm) | MVTR B method (g/m²/24h) | Tensile strength (MD, MPa) | Minimum thickness (μm) |
|---|---|---|---|---|---|
| CE1 | | | 3038 | | 25 |
| CE2 | 17848 | 368640 | 2452 | | 25 |
| 3 | 12258 | 96120 | 449 | 21.4 | 40 |
| 4 | 14582 | 99185 | 122 | | 25 |
| CE5 | | | 3135 | | 25 |
| CE6 | 14640 | 188160 | 2236 | | 25 |
| 7 | 14560 | 89600 | 67 | 18.5 | 25 |
| 8 | 14007 | 56448 | 12 | | 25 |
| 9 | 6992 | 36800 | 10 | | 25 |
| 10 | 8624 | 44880 | 8 | | 25 |
| 11 | | | | 16.5 | 50 |
| 12 | 14328 | 183680 | 175 | 28.5 | 40 |
| 13 | 24878 | 266640 | 179 | 8.6 | 70 |

It can be seen from Table 2 that the films of examples 3, 4, 7-13 provided good permeability of $CO_2$ and $O_2$ and a relatively lower range of MVTR (from 8 to 449) compared to the films of comparative examples 1, 2, 5 and 6. Too high values of MVTR may lead to withering of fruits or vegetables. The composition according to the invention advantageously provides a film having an ideal range of MVTR which is suitable for packaging fresh products.

Claims

1.   Composition comprising:

   (e) a polyamide (PA),
   (f) a polymer having polyamide (PA) blocks and polyethylene glycol (PEG) blocks,
   (g) a functionalized polyolefin, and

(h) a polyolefin,

wherein the weight ratio of (a+b)/(c+d) is < 1.

2.  Composition according to claim 1, wherein the weight ratio of b/(a+b+c+d) is between 0.1 and 0.5.

3.  Composition according to any one of the preceding claims, wherein the polyamide in (a) is or comprises PA6, PA6.6, PA6.10, PA10.10, PA10.12, PA11, PA12, PA6.12 and/or PA12.12, preferably PA11 and/or PA 12.

4.  Composition according to any one of the preceding claims, wherein the polyamide blocks in polymer (b) is or comprises PA6, PA6.6, PA6.10, PA10.10, PA10.12, PA11, PA12, PA6.12 and/or PA12.12, preferably PA11 and/or PA 12.

5.  Composition according to any one of the preceding claims, wherein the mean carbon content of repeating units of the polyamide (a) and/or of the polyamide blocks in the polymer (b) is at least 8, preferably from 8 to 14, more preferably from 10 to 12.

6.  Composition according to any one of the preceding claims, wherein the polyamide of the polyamide blocks in (b) is the same as the polyamide in (a).

7.  Composition according to any one of the preceding claims, wherein the polymer (b) comprises at least 30% by weight, preferably at least 40% by weight, more preferably at least 50% by weight of polyethylene glycol (PEG), with regards to the total weight of the polymer (b).

8.  Composition according to any one of the preceding claims, wherein the functionalized polyolefin in (c) is or comprises an ethylene/butyl acrylate/maleic anhydride copolymer or an ethylene/ethyl acrylate/glycidyl methacrylate copolymer, preferably, a copolymer of ethylene and glycidyl methacrylate (GMA).

9.  Composition according to any one of the preceding claims, wherein the polyolefin in (d) is or comprises an ethylene-methyl acrylate copolymer or LLDPE.

10. A method of making a composition, comprising a step of blending:

    (a) a polyamide (PA),
    (b) a polymer having polyamide (PA) blocks and polyethylene glycol (PEG) blocks,
    (c) a functionalized polyolefin, and
    (d) a polyolefin,

    wherein the weight ratio of (a+b)/(c+d) is less than 1.

11. Method according to claim 11, comprising a step (i) of blending (a), (b), (c) to obtain a base polymer blend or mixture, and a step (ii) of blending (d) a polyolefin to the base polymer blend or mixture.

12. Article comprising or made from the composition according to any one of claims 1 to 10, preferably the article being a film, a sheet, or a bag.

13. Article according to claim 12, having a MVTR of between 8 and 500 $g/m^2/24h$, preferably between 10 and 500 $g/m^2/24h$, more preferably between 12 and 500 $g/m^2/24h$, measured at 23°C, for a relative humidity level of 50% at a thickness of 25 $\mu$m.

14. Method of making the article according to claim 12 or 13, comprising the following steps:

    - obtaining the composition by the method according to any one of claims 10 to 11; and
    - extruding or molding the composition into a film or a sheet.

15. Use of an article according to claim 12 or 13, for food packaging.

Europäisches
Patentamt

European
Patent Office

Office européen
des brevets

# EUROPEAN SEARCH REPORT

**Application Number**

EP 22 31 5241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 840 807 A (FREY ALAIN [FR] ET AL) 24 November 1998 (1998-11-24) * claims 1-11 * * column 4, line 42 - line 51 * * column 5, line 66 - line 67 * | 1-15 | INV. B32B27/32 B32B27/34 C08L23/04 C08J5/18 |
| A | US 5 959 042 A (BOUILLOUX ALAIN [FR] ET AL) 28 September 1999 (1999-09-28) * claims 1-38 * * column 6, line 63 - column 7, line 10 * | 1-15 | |
| X | JP H05 202239 A (TORAY INDUSTRIES) 10 August 1993 (1993-08-10)  * examples 2-9; table 1 * * paragraph [0077] - paragraph [0085] * | 1,2,5,7, 8,10,12, 14 | |

| TECHNICAL FIELDS SEARCHED (IPC) |
|---|
| B32B C08L C08J |

The present search report has been drawn up for all claims

| Place of search | Date of completion of the search | Examiner |
|---|---|---|
| Munich | 28 March 2023 | Laudi, Ines |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 31 5241

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2023

| Patent document cited in search report | | Publication date | Patent family member(s) | | | Publication date |
|---|---|---|---|---|---|---|
| US 5840807 | A | 24-11-1998 | AT | 258951 | T | 15-02-2004 |
| | | | CA | 2173816 | A1 | 12-10-1996 |
| | | | CN | 1137471 | A | 11-12-1996 |
| | | | DE | 69631449 | T2 | 16-09-2004 |
| | | | EP | 0737709 | A1 | 16-10-1996 |
| | | | ES | 2216042 | T3 | 16-10-2004 |
| | | | JP | 3101201 | B2 | 23-10-2000 |
| | | | JP | H08283432 | A | 29-10-1996 |
| | | | KR | 960037524 | A | 19-11-1996 |
| | | | NO | 312198 | B1 | 08-04-2002 |
| | | | SG | 75095 | A1 | 19-09-2000 |
| | | | US | 5840807 | A | 24-11-1998 |
| | | | US | 5888597 | A | 30-03-1999 |
| US 5959042 | A | 28-09-1999 | CA | 2219483 | A1 | 19-05-1998 |
| | | | CN | 1183436 | A | 03-06-1998 |
| | | | EP | 0842969 | A1 | 20-05-1998 |
| | | | FR | 2755970 | A1 | 22-05-1998 |
| | | | JP | 3227118 | B2 | 12-11-2001 |
| | | | JP | H10158509 | A | 16-06-1998 |
| | | | KR | 19980042581 | A | 17-08-1998 |
| | | | US | 5959042 | A | 28-09-1999 |
| JP H05202239 | A | 10-08-1993 | NONE | | | |

EPO FORM P0459

For more details about this annex : see Official Journal of the European Patent Office, No. 12/82

**EP 4 357 132 A1**

**REFERENCES CITED IN THE DESCRIPTION**

**Patent documents cited in the description**

- US 5959042 A
- EP 0476963 A
- FR 7418913
- FR 7726678
- US 4331786 A
- US 4115475 A
- US 4195015 A
- US 4839441 A
- US 4864014 A
- US 4230838 A
- US 4332920 A
- EP 0342066 A